**Europäisches Patentamt**

**European Patent Office**

**Office européen des brevets**

(11) Veröffentlichungsnummer: **0 321 747**
**A1**

## EUROPÄISCHE PATENTANMELDUNG

(21) Anmeldenummer: **88119942.6**

(22) Anmeldetag: **30.11.88**

(51) Int. Cl.4: **C02F 1/52 , C01G 49/14**

(30) Priorität: **19.12.87 DE 3743164**

(43) Veröffentlichungstag der Anmeldung:
**28.06.89 Patentblatt 89/26**

(84) Benannte Vertragsstaaten:
**BE DE ES FR GR IT LU NL**

(71) Anmelder: **Rheinische Braunkohlenwerke AG.**
**Stüttgenweg 2**
**D-5000 Köln 41(DE)**

(72) Erfinder: **Ritter, Günter, Dipl.-Chem. Dr.-Ing.**
**Goethestrasse 29**
**D-5040 Brühl(DE)**
Erfinder: **Erken, Manfred, Dipl.-Ing.**
**Lothringer Ring 27**
**D-5010 Bergheim(DE)**

(74) Vertreter: **Koepsell, Helmut, Dipl.-Ing.**
**Mittelstrasse 7**
**D-5000 Köln 1(DE)**

(54) **Verfahren zur Herstellung und Verwendung von granuliertem Grünsalz.**

(57) Die Erfindung betrifft ein Verfahren zur Herstellung von granuliertem Grünsalz unter Verwendung von Koks.

Ihr liegt die Aufgabe zugrunde, ein Gemenge herzustellen, worin die Eignungsfähigkeit der beiden Komponenten zur Abwasserreinigung in vorteilhafter Weise vergrößert wird.

Die Lösung sieht vor, daß man feuchtes Grünsalz mit Herdofenkoks aus Braunkohle in einem solchen Mengenverhältnis mischt, daß ein riesel- und lagerfähiges Gemenge der beiden Stoffe erhalten wird. Ein solches Gemenge enthält beispielsweise 1 Teil Braunkohlenkoksstaub und 3 Teile Grünsalz. Das Vermischen erfolgt unter intensivem Rühren. Das Gemenge wird u. a. als Fällungs-Flockungsmittel in der biologischen Abwasserreinigung eingesetzt. Der anfallende Klärschlamm wird einer Verbrennungsanlage zugeführt.

## Verfahren zur Herstellung von granuliertem Grünsalz

Die Erfindung betrifft ein Verfahren zur Herstellung von granuliertem Grünsalz unter Verwendung von Koks.

Grünsalz hat die chemische Formel $FeSO_4 \cdot 7H_2O$. Es ist ein Abfallprodukt, welches hauptsächlich bei der Titandioxid-Herstellung anfällt. Es fällt als feuchte, schmierige Masse an, deren Handhabung außerordentlich unangenehm ist. Mit pH-Werten zwischen 1 und 2 ist es sehr sauer und aufgrund dieser sauren Beschaffenheit und der dem Grünsalz anhaftenden Restfeuchte kann es nur mit Schwierigkeiten gehandhabt werden. So muß es beispielsweise in besonders säurefesten Behältern gelagert werden, und die hohe Restfeuchte macht beim Lagern besondere Maßnahmen erforderlich, um eine Entleerung der Lagerbehälter zu ermöglichen. Die Behälter selbst bedürfen eines besonderen Korrosionsschutzes.

Aufgrund seines Eisengehalts ist aber das Grünsalz noch ein begehrter Rohstoff für weitere Verwendungsmöglichkeiten. So ist beispielsweise aus der DE-PS 32 08 699 der Anmelderin ein Verfahren zur Herstellung von granuliertem Grünsalz unter Verwendung von staubförmiger getrockneter Braunkohle bekannt, wobei das resultierende Gemisch riesel- und lagerfähig ist und als Katalysator bei der hydrierenden Verflüssigung von Kohle zum Einsatz gelangt. In der gleichen Schrift wird ein Hinweis gegeben, daß das Grünsalz als Flokkungsmittel bei der Abwasserreinigung eingesetzt werden kann.

Aus der einschlägigen FR-PS 1.306.523 ist ein Verfahren zur Herstellung von granuliertem Grünsalz mit fester Konsistenz bekannt, wobei neben anderen Zutaten auch Koks, insbesondere Petrolkoks zur Anwendung gelangt (vgl. S. 2, rechte Spalte, Zeile 34).

Die DE-PS 32 08 699 der Anmelderin geht von der Aufgabenstellung aus, die Handhabbarkeit von Grünsalz unter Anwendung einfacher und billiger Mittel merklich zu verbessern. Hiervon unterscheidet sich die Aufgabenstellung der vorliegenden Erfindung insofern, als es darum geht, die Handhabbarkeit und Verwendungsmöglichkeit von Grünsalz in weiteren Anwendungsfällen zu verbessern. Beispielsweise ist eine Abwasserreinigung mit einem Gemisch aus Grünsalz und Braunkohle, wie es die Patentschrift vorschlägt, nicht möglich.

Erfindungsgemäß wird diese Aufgabe dadurch gelöst, daß man feuchtes Grünsalz mit Herdofenkoks aus Braunkohle in einem solchen Mengenverhältnis vermengt, daß ein riesel- und lagerfähiges Gemenge der beiden Stoffe erhalten wird.

Über die Herstellung von Braunkohlenkoks auf dem Herdofen wird in den nachfolgenden Veröffentlichungen so viel mitgeteilt, wie zum besseren Verständis des Hintergrundes der vorliegenden Erfindung geeignet ist:

H. B. Königs: "Feinkokserzeugung aus Braunkohle" Energiewirtschaftliche Tagesfragen, 27. Jahrgang, 1977, Heft 8/9, S. 569-599 und

E. Scherrer: "Herstellung von Braunkohlenkoks im Salem-Lurgi-Herdofen" Braunkohle, Heft 7, Juli 1981, S. 242-246 und

D. Böcker: "Edle Körner" Energie, Jahrgang 35, 1983, Heft 3, S. 35-37.

Die Veröffentlichungen machen deutlich, daß es sich bei dem Herdofenkoks aus Braunkohle um einen durch einen üblichen thermischen Destilationsprozeß gewonnenen Koks handelt, der eine Reihe von vorzüglichen Eigenschaften aufweist, die ihn als wertvolles Veredlungsprodukt kennzeichnen.

Ein gut riesel- und lagerfähiges, granuliertes Gemenge aus Braunkohlenkoksstaub und Grünsalz wird bereits erhalten, wenn man Braunkohlenkoksstaub mit dem Grünsalz im Verhältnis der Volumina von 1:3 vermengt. Dieses Mischungsverhältnis macht deutlich, daß zu einer entscheidenden Verbesserung der Handhabungsfähigkeit des Grünsalzes bereits eine verhältnismäßig geringe Menge an Braunkohlenkoksstaub ausreichend ist.

Zweckmäßig erfolgt das Herstellen des Gemenges aus Braunkohlenkoks und Grünsalz unter intensivem Rühren in einem Rührwerk.

Das Gemenge hat besondere Vorteile beim Einsatz als Fällungs-Flockungsmittel bei der Abwasserreinigung. Die Eignungsfähigkeit von Grünsalz als Flockungsmittel ist ebenso bekannt wie die Eignungsfähigkeit des Braunkohlenkokses als Adsorptionsmittel für die Schadstoffe bei der Abwasserreinigung.

Dabei kann man so verfahren, daß man das Abwasser zunächst mit dem Braunkohlenkoks in Berührung bringt, wodurch die Schadstoffe, insbesondere biologisch schwer abbaubare Verbindungen, durch Anlagerung an den Braunkohlenkoks aus dem Abwasser entfernt werden. Die anschließende Behandlung des Abwassers mit Grünsalz bewirkt das Ausflocken von Schadstoffen in Form einer gallertartigen Masse, die als Schlamm aus dem Abwasser abgezogen werden kann.

Bei Untersuchungen zum Einsatz von Braunkohlenkoks in der Abwasserreinigung wurde festgestellt, daß neben einer Unterstützung von biologischen Reinigungsprozessen durch die Adsorption von Abwasserinhaltsstoffen eine Reinigungswirkung erzielt wird. Diese Reinigungswirkung ist stark abhängig von der Art der Verunreinigungen und reicht in vielen Fällen nicht aus, um beispielsweise eine Fällungs-Flockungsstufe zu ersetzen. Oft ist sogar die Nachschaltung einer solchen Stufe notwendig, um die mit Schadstoffen beladenen Kokspartikel aus dem Abwasser wieder zu entfernen.

Herdofenkoks aus Braunkohle liegt in drei Anlieferungszuständen vor:
- Feinkoks mit einer Körnung zwischen 1,25 bis 5 mm
- Feinstkoks mit einer Körnung zwischen 0 bis 1,5 mm
- Koksstaub mit einer Körnung < 0,4 mm

Der Wassergehalt des Kokses beträgt im Mittel zwischen 0 und 0,5 Gew. %, der Aschegehalt zwischen 8 und 10 Gew. % und der Gehalt an flüchtigen Bestandteilen zwischen 3 und 4 Gew. %. Der Anteil an Cfix beträgt zwischen 85,5 und 89 Gew. %. Der Heizwert Hu liegt bei 30 MJ/kg.

Es wurde nunmehr gefunden, daß durch den Einsatz eines Gemenges aus Braunkohlenkoksstaub und Grünsalz nicht nur die Vorteile beider bekannten Verfahren kombiniert werden können, sondern daß darüberhinaus weitere Verbesserungen erzielt werden. Daraus ergibt sich eine ganze Reihe von Vorteilen, nämlich:
- durch die Vermischung von feuchtem Grünsalz mit Braunkohlenkoks wird ohne weitere Behandlungsschritte ein riesel-und lagerfähiges Produkt erhalten, das gut handhabbar ist und auch bei langer Lagerzeit in großen Siloanlagen diese Eigenschaften nicht verliert,
- der Einsatz eines Gemenges aus Braunkohlenkoks und Grünsalz beim Fällungs-Flockungsverfahren in der Abwasserreinigung führt zu besseren Reinigungserfolgen als die Anwendung der beiden Komponenten für sich allein,
- durch die in der Flockungsmasse enthaltenen Kokspartikel wird die Entwässerbarkeit des Schlammes deutlich verbessert und
- bei einer anschließenden Entsorgung der Klärschlämme in einer Verbrennungsanlage wird der Heizwert der Schlämme durch den enthaltenen Koks deutlich erhöht, was mit einer höheren Nutzenergie bzw. Einsparung von Zusatzbrennstoffen verbunden ist.

Nachfolgend wird die Erfindung anhand eines Ausführungsbeispiels näher beschrieben.

Es wurde ein Gemenge aus 75 Gew. % Grünsalz und 25 Gew. % Braunkohlenkoksstaub hergestellt. Die Masse war gut fließfähig. Auch nach Lagerung über 10 Tage mit einer künstlichen Belastung von 1 kg/cm² blieb die Rieselfähigkeit erhalten.

Gleiche Flockungsschlämme aus der Abwasserreinigung mit und ohne Braunkohlenkoksstaub wurden in Zentrifugen entwässert. Es ergab sich, daß die kokshaltigen Schlämme mit einem Anteil von 10 - 20 Gew. % Koks in der Trockenmasse in allen Fällen einen 5 - 10 Gew. % geringeren Wassergehalt gegenüber den kokslosen Schlämmen nach Durchgang durch die Zentrifugen aufwiesen.

## Ansprüche

1. Verfahren zur Herstellung von granuliertem Grünsalz unter Verwendung von Koks, dadurch gekennzeichnet, daß man feuchtes Grünsalz mit Herdofenkoks aus Braunkohle in einem solchen Mengenverhältnis vermengt, daß ein riesel- und lagerfähiges Gemenge der beiden Stoffe erhalten wird.

2. Verfahren nach Anspruch 1, dadurch gekennzeichnet, daß man Braunkohlenkoksstaub mit Grünsalz im Verhältnis der Volumina 1:3 vermengt.

3. Verfahren nach einem der Ansprüche 1 und 2, dadurch gekennzeichnet, daß das Vermengen unter intensivem Rühren erfolgt.

4. Verwendung von nach einem der vorhergehenden Ansprüche 1 bis 3 hergestellten granulierten Grünsalz, dadurch gekennzeichnet, daß man das Gemenge als Fällungs-Flockungsmittel bei der Abwasserreinigung einsetzt.

5. Verwendung nach Anspruch 4, dadurch gekennzeichnet, daß man den anfallenden Klärschlamm in einer Verbrennungsanlage entsorgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 208 699 (RHEINISCHE BRAUNKOHLENWERKE) * Seite 1, Ansprüche 1,4; Seite 2, erster Absatz; Seite 7, letzter Absatz * | 1,2,4 | C 02 F 1/52 C 01 G 49/14 |
| A | DE-C- 668 464 (R.A. HENRY) * Seite 3, Anspruch; Seite 2, Zeilen 58-67 * | 1,4 | |

**RECHERCHIERTE SACHGEBIETE (Int. Cl.4)**

C 02 F
C 01 G

Der vorliegende Recherchenbericht wurde für alle Patentansprüche erstellt

| Recherchenort | Abschlußdatum der Recherche | Prüfer |
|---|---|---|
| DEN HAAG | 22-03-1989 | TEPLY J. |